# EUROPEAN PATENT SPECIFICATION

(11) **EP 3 298 452 B1**
(45) Date of publication and mention of the grant of the patent: **02.11.2022**
(21) Application number: 16797320.5
(22) Date of filing: 19.05.2016
(51) Int. Cl.: G02B 27/01, G06K 9/00, A61B 5/117

(54) **TILT SHIFT IRIS IMAGING**
IRISBILDGEBUNG MIT TILT-SHIFT
IMAGERIE D'IRIS À DÉCALAGE PAR INCLINAISON

(30) Priority: 20.05.2015 US 201562164257 P
(43) Date of publication of application: 28.03.2018
(73) Proprietor: Magic Leap, Inc., Plantation, FL 33322 (US)
(72) Inventor: KAEHLER, Adrian, San Diego, CA 92103 (US)
(74) Representative: Lecomte & Partners
(86) International application number: PCT/US2016/033336
(87) International publication number: WO 2016/187457

(56) References cited:
- WO-A2-2012/087245
- US-A1- 2003 169 334
- US-A1- 2005 008 200
- US-A1- 2005 008 200
- US-A1- 2006 140 454
- US-A1- 2009 040 622
- US-A1- 2011 058 712
- US-A1- 2013 241 805
- US-A1- 2013 241 805
- US-A1- 2014 218 281
- US-A1- 2014 307 077
- Alpa: "Parallel shift and Scheimpflug lens tilt - The use and ideal design of technical cameras", , 1 June 2012 (2012-06-01), XP055427124, Retrieved from the Internet: URL:https://www.alpa.ch/_files/ALPA_Tilt-2 01206_E.pdf [retrieved on 2017-11-21]

## Description

### CROSS-REFERENCE TO RELATED APPLICATIONS

This application claims priority to U.S. Provisional Application Serial No. 62/164,257 filed on May 20, 2015.

### FIELD

This application relates to imaging systems and methods for biometric recognition and identification. The imaging systems and methods are generally applicable to iris recognition and identification in a one-to-one verification of identity, but can also be used in one-to-many identification situations. Specifically, off-axis imaging of the iris may be accomplished using these systems and methods.

### BACKGROUND

Biometrics is a process by which an individual's unique physical traits or characteristics are detected and recorded as a means of determining or confirming identity. Fingerprints, voice patterns, facial patterns, and retinal blood vessel patterns are several examples of distinguishing physical traits currently in use. Scanning of the human iris is also a well-known biometric method.

Iris verification is a one-to-one process by which a computed biometric code, called a "template", from an individual is compared to a previously stored biometric code to determine if the person is who he or she claims to be. On the other hand, iris identification is a one-to-many process in which a computed biometric template from an individual is compared to a database of many different biometric templates with the objective of determining the identity of the individual from a known population. The iris of the eye has a visible pattern that is unique to each person, including genetically identical individuals (i.e., identical twins). It also has a datarich physical structure with sufficient information content to be used for discrimination between individuals. One advantage of using iris patterns as unique identifiers is that they are only weakly affected by aging, and thus can be used over the lifetime of an individual.

Several techniques have been developed to accurately image the iris for collection of biometric information. Many of these techniques require cooperation by the individual and/or that the image of the iris be taken from a camera located in front of the eye ("on-axis" or "inline" with the iris). For example, when using the IriScan 2100 (IriScan, Marlton, N.J.) iris scanner, which includes a camera and monitor on an adjustable swivel, the subject must stand about a foot in front of the camera and adjust the swivel until a clear image of his/her eye can be seen on the monitor screen. He/she must then move slowly toward the camera, keeping the eye centered in a window of the monitor, until the camera captures an image. An iris code, which is a standard biometric template derived from the iris image, is then typically stored along with other data associated with a particular individual in a database, thereby completing an enrollment process. Later, when that same person needs to be verified, a new image of the eye is obtained in the same manner employed for enrollment, and used to compute an iris code which is then compared with the iris code on file. While this procedure is satisfactory for some applications, the need for self-alignment of the iris to adequately focus it for imaging prevents it from being sufficiently quick for certain other access control activities. Furthermore, if implemented in a head-mounted system such as glasses or goggles, this type of imager would block the user's view of the actual world.

Another system for imaging the iris is provided in U.S. 8,317,325 to Raguin et al. Instead of using information from a single eye, as typical of known iris recognition systems, the Raguin et al. system uses information from both the right and left iris of a person to enroll, identify, or verify the person. Additionally, the system includes a processor that uses images of the two eyes to determine a head tilt angle between a virtual line extending between the two eyes, and rotates the left and right iris images in accordance with the angle to substantially remove head tilt, if present. However, like the IriScan 2100, the user (or the imaging device) must translate along the axis of the imaging device to adjust the focus of the iris.

In yet another iris detection system, which is described in U.S. 8,064, 647 to Bazakos et al., and which does not require self-alignment of the iris, multiple regions of the iris are imaged and subjected to segmentation algorithms that are capable of outlining the iris. If the initial regional images are not appropriately oriented or sufficiently focused, additional images are taken, and those images processed to obtain a numeric code. The imaging technique disclosed by Bazakos et al. may be useful when the iris is remote from the camera, but also may not be rapid enough for certain applications requiring user identification.

In another instance, as disclosed in U.S. 6,320,610 to Van Sant et al., a mirror is provided on a tilting frame in an automated teller machine (ATM) system so that it can be adjusted to receive light reflected from the iris and then direct the reflected light to a camera for generating an iris image. The Van Sant et al. system does not require cooperation by the user or placement of the iris in line with a camera, but it may only be useful in larger electromechanical devices such as ATMs.

Another iris recognition system provided with a head-mounted display and using a tilted camera is disclosed in patent publication US-A1-2014/307077. The patent publication US-A1-2011/058712 furthermore discloses an iris camera having a tilt lens.

Thus, current iris recognition systems are generally limited in their application because they either require actual cooperation by the user and/or require that the user places his or her eye or eyes for a few seconds in line with the imaging device. As previously stated, this may be sufficient for some access control applications but not fast enough for others. Additionally, the requirement for the iris to be in line (on-axis) with the imaging device may not be feasible in some identification systems, e.g., identification systems for use with head-mounted technologies.

Accordingly, it would be useful to have imaging systems capable of imaging the iris quickly and accurately. Systems that provide off-axis imaging of the iris would also be beneficial. Methods of using the iris imaging systems for access control would also be useful.

### SUMMARY

Described herein are systems for imaging the iris. The systems generally include an off-axis (i.e., off center of the eye or iris) imager attached to an optical device. The off-axis imager typically comprises a lens and an imager/camera body. An optical device according to the invention as specified in appended claim 1 includes a head-mounted device.

The off-axis imager may be mounted to the lower rim of a pair of eyeglasses. In order to obtain clear and/or accurate images, the lens of the off-axis imaging device may be provided with a degree of tilt that adjusts the angle of the plane of focus to be parallel with the plane of the object being imaged, e.g., the plane of the iris. The off-axis imaging device according to the invention is provided with a shift offset.

Work has been done on off-axis iris recognition, often under the heading of "non-cooperative iris recognition." However, in this instance, the existing body of research focuses on the problem of recognition when an iris image is only fleetingly acquired. This circumstance differs substantially from the context of the systems and methods described herein, in which the relative geometry between the imager and the iris is known in advance to a substantial degree.

Methods for imaging the iris are also described herein. The methods generally include providing an optical device having an off-axis imager attached thereto and imaging an iris of an individual using the off-axis imager. The iris images may be used to obtain biometric information from the individual. A processor included with the systems may be used to process the biometric information using iris algorithms to convert it to iris codes, which may then be used to verify the identity of the individual.

### BRIEF DESCRIPTION OF THE DRAWINGS

FIG. 1 illustrates imaging of an iris with an on-axis camera not according to the invention.
FIG. 2 is an exemplary illustration of iris imaging using an off-axis camera not according to the invention.
FIG. 3 is an exemplary illustration of iris imaging using an off-axis camera where tilt has been applied to the lens not according to the invention.
FIG. 4 is an exemplary illustration of iris imaging using an off-axis camera where a shift offset has been applied to the lens according to the invention.

### DETAILED DESCRIPTION

Described herein are systems and methods for imaging the iris. The systems and methods may employ an off-axis imager to image the iris and subsequently extract biometric information as a means of verifying the identity of the user with a high degree of accuracy. The lens of the off-axis imager is shifted and optionally tilted to appropriately position the camera lens for iris imaging.

As previously stated, iris imaging can be used as a powerful means of biometric identification. The pattern of muscle fibers in the iris of the eye forms a stable and unique pattern for each person. Biometric accuracy generally relies on how well the iris image is resolved, focused, segmented, and extracted. When acquiring iris images, the number of "on-iris" pixels, iris exposure, dynamic range, and focus must all be sufficiently precise to produce a high quality image that captures the intricacy of the iris tissue structure.

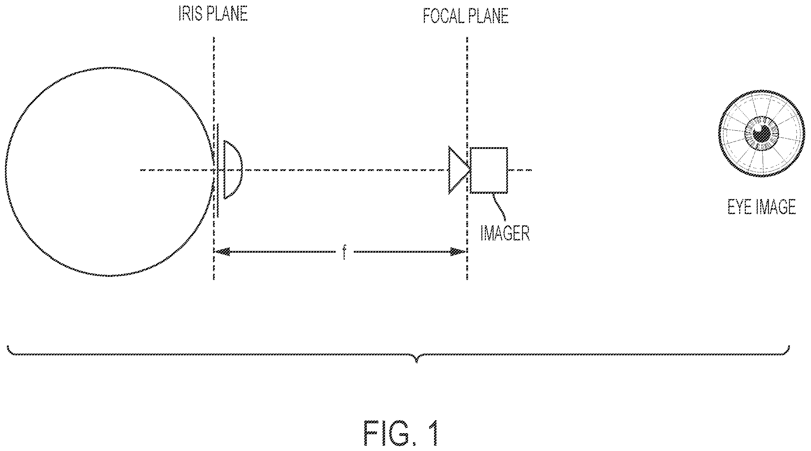

In many existing systems, as shown in FIG. 1, a camera (imager) near to the eye of the target is used to make an image of the iris from which identifying features can then be extracted. Here the camera is close and the iris plane and focal plane are parallel to each other, but the need for a very short focal length (f) makes imaging very difficult, as the necessary aperture makes the effective depth of field very small. Furthermore, the camera is located right in front of the eye, which would block the user's field of view if implemented in a head-mounted system such as goggles or a pair of eyeglasses.

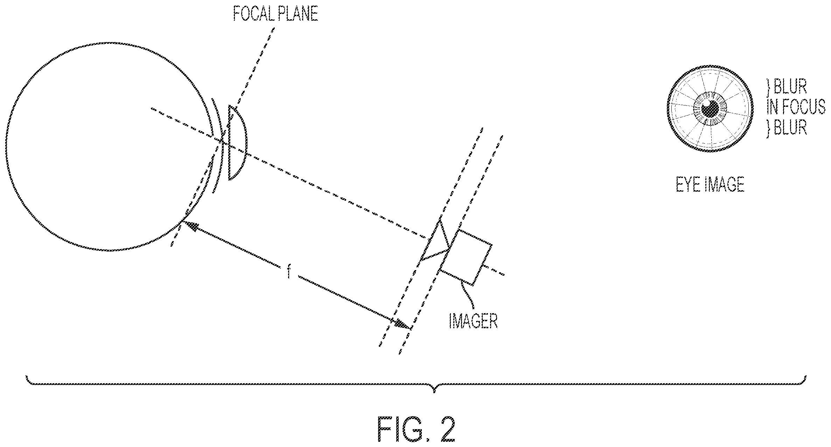

If the camera or imager is located off-axis (i.e., off center of the eye or iris), as would be the case in a head-mounted system, and as shown in FIG. 2, a problem may be created where the plane of the iris (which is flat) and the focal plane are not parallel. Given a small depth of field imager, the result would be blurring and distortion for a large and potentially unacceptable fraction of the iris.

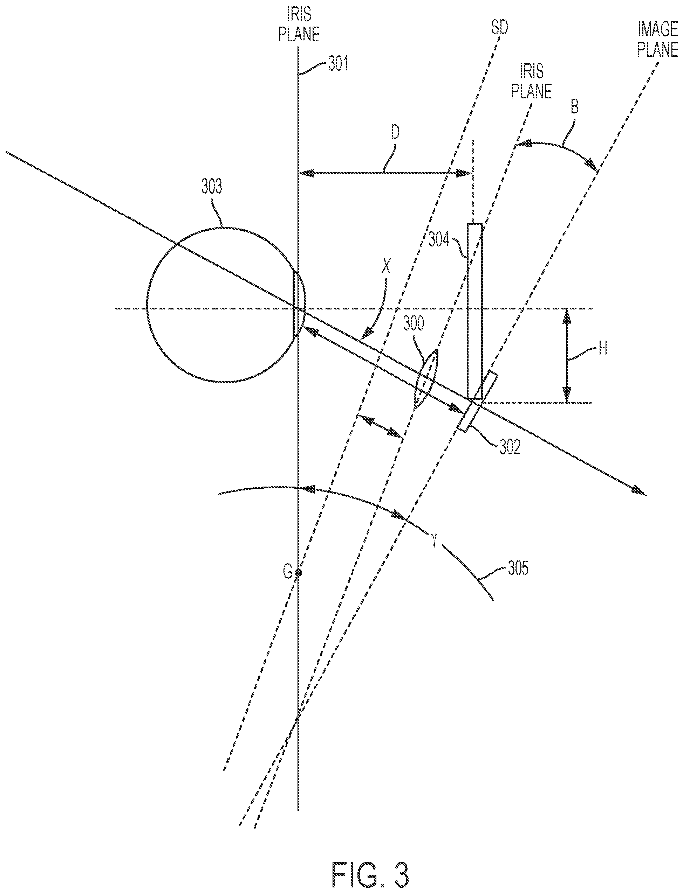

One solution to the problem mentioned above is to provide the camera with a tilt-shift lens that would adjust the angle of the plane of focus to be parallel with the plane of the iris, as illustrated in FIG. 3. Referring to FIG. 3, the lens (300) of an off-axis camera or imager (302) not according to the invention is tilted (rotated) to change the focal plane of the imager to be parallel with the plane of the iris. In general, tilt can be used to control the orientation of the plane of focus.

To further explain, a camera lens can provide sharp focus on only a single plane. Thus, without tilt in the scenario of FIG. 2, the iris image is taken on a focal plane that runs parallel to the lens/imager (and which is perpendicular to the lens axis); objects in sharp focus are all at the same distance from the camera, as measured parallel to the axis normal to both the lens and the imager, while others at different distances from the camera are blurry. As illustrated in FIG. 3, an eye (303) is shown that is to be imaged with an off-axis imager comprising a lens (300) and an imager/camera body (302). Imager body (302) is attached near or to the lower edge of a display (304). The display can be a transparent display such as the lens of a pair of eyeglasses. The lens (300) is tilted (e.g., by tilt angle (*ψ*), (305)) so that the plane of focus is restored to be parallel to the plane of the iris (301). Objects lying in this plane, though at different distances from the camera, can all be sharply focused onto the imager body (302). Thus, it may be beneficial to have a camera lens capable of tilting, or capable of being mounted in a tilted position, when attempting to obtain accurate images of the iris from a head-mounted device.

The off-axis imagers described herein may include a lens configured with a tilt (tilt angle) ranging from between about 2.0 to about 8.5 degrees (lens angle relative to the imager plane). For example, on a frame of the kind found on typical eyeglasses, the amount of lens tilt (lens angle relative to the imager plane) may be about 2.0 degrees, about 2.5 degrees, about 3.0 degrees, about 3.5 degrees, about 4.0 degrees, about 4.5 degrees, about 5.0 degrees, about 5.5 degrees, about 6.0 degrees, about 6.5 degrees, about 7.0 degrees, about 8.0 degrees, or about 8.5 degrees. It is understood that the degree of tilt may be smaller or larger depending on other values used when applying the Scheimpflug rule, which is a known geometric rule that describes the orientation of the plane of focus of an optical system when the lens plane is not parallel to the image plane. In general, the off-axis imagers include a lens with a fixed degree of tilt; however, in some instances the off-axis imager may have a lens configured with an adjustable tilt.

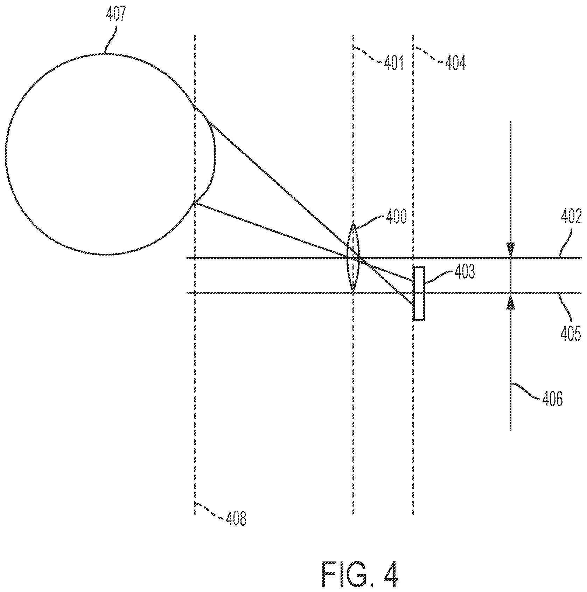

In addition to tilt, the off-axis imagers include a lens configured to provide a shift offset. Referring to FIG. 4, lens shift refers to a displacement (406, measurement between 405 and 402) of the lens (400) such that the displacement is both confined to the plane (401) of the lens (400), and such that the plane of the lens is kept parallel to the plane (404) of the imager body (403). Such a displacement leaves the focal plane (408) of the lens (400) also parallel to the lens and imager planes (401 and 404, respectively). In effect, shift offset allows adjustment of the position of the iris in the image area without changing the imager (camera) angle; in effect the imager can be aimed at the eye (407) and then a shift offset (406) or movement applied as an alternative to reorienting the imager body (403). Shifting a lens may also allow different portions of the iris image to be cast onto the image plane, similar to cropping an area along the edge of an image. Adding a shift function to a lens will generally permit the focal plane of the imager to remain parallel to the plane of the iris while still taking in the full height of the iris, as illustrated in FIG. 4. This will allow vertical lines in the iris to be perfectly vertical in the resultant photographed image, and more generally to eliminate one important form of distortion from the resulting image.

The off-axis imagers described herein according to the invention are configured to have a (lens) shift ranging from between about 1.0 and about 2.5 mm. For example, on a frame of the kind found on typical eyeglasses, the amount of shift may be about 1.0 mm, about 1.1 mm, about 1.2 mm, about 1.3 mm, about 1.4 mm, about 1.5 mm, about 1.6 mm, about 1.7 mm, about 1.8 mm, about 1.9 mm, about 2.0 mm, about 2.1 mm, about 2.2 mm, about 2.3 mm, about 2.4 mm, or about 2.5 mm. Similar to tilt, it is understood that the amount of shift may be smaller or larger depending on other values used when applying the Scheimpflug rule. The off-axis imagers also generally include a lens where the shift offset is fixed; however, in some instances the off-axis imager may have a lens configured to have an adjustable amount of shift.

In one variation, the head-mounted system is a pair of eyeglasses comprising a transparent display (lens or lenses of the eyeglasses), an upper rim (upper frame), a lower rim (lower frame), and an imager attached or mounted to the lower rim about 20 mm below the optic axis (of the eye in rest position). The depth to the iris (measured perpendicular to the transparent display) may range between 15 to 30 mm. Here, in order to restore the plane of focus of the off-axis imager to be parallel with the plane of the iris (and if the imager has a 1.62 mm focal length lens and a distance from the lens to the camera body of 1.7 mm), the amount of lens tilt may be between 2.1 and 8.2 degrees (lens angle relative to the imager plane), or the shift offset between 1.1 and 2.3 mm (as calculated using the Scheimflug equation). Accordingly, if the pair of glasses includes an imager having a fixed geometry, i.e., a fixed tilt angle of the lens and a fixed shift offset of the camera, the tilt angle may be fixed between about 2.1 and about 8.2 degrees, or the shift offset may be fixed between about 1.1 and about 2.3 mm. A combined implementation in which both the tilt and shift are utilized is also possible.

In addition to placement out of the field of view of the user, the iris imaging system is generally sized or otherwise configured for minimal or no interference with a user's field of view of the actual world. The imaging system may be only a few millimeters on each side, e.g., about 5.0 to 8.0 mm on each side, and a few millimeters deep. In some variations, the camera body for imaging the iris includes a plurality of chip-level cameras mounted on or carried by a flexible substrate, for instance, a flexible printed circuit board substrate. The flexible substrate may be put over an anvil and potted with potting compound, to inexpensively form an essentially wide angle lens. For example, tiny cameras may be built with a layer approach, using wafer level technology.

Once an image of the iris is taken, data can be extracted relating to various iris patterns and turned into a numeric iris code. Given that the cameras would be viewing the iris from below and/or the side, the code generated for the head-mounted device would not have to be rotation invariant.

Once a focused and centered image is obtained by the iris imaging system, the digitized image may be passed to a processor to compute an iris code in any suitable manner, e.g., as defined by U.S. Pat. No. 5,291,560 to Daugman, or by various segmentation methods, e.g. as defined by U.S. 8,064,647 to Bazakos et al. The computed iris code is then compared to the iris code which corresponds to the user. If the codes match, the user's identity is verified. Verification or identification processing may be performed at a remote location, and it is understood that in these instances the iris code may be securely transmitted to and/or from the head-mounted device.

When analyzing iris images of users, the segmentation approach may be a useful and relatively straightforward process of edge detection and circular fitting. In some variations, the iris biometric approach may include using a POSE^{™} (i.e., Honeywell International Inc.-polar segmentation) technique to move virtually immediately the analysis to a polar domain and execute a 1-D segmentation of the iris borders, using one or more symmetry properties to detect one or more non-occluded areas of the iris. Using this method, non-symmetric regions can correspond to areas partially covered by eyelashes, eyelids, etc.

## Claims

1. A system for imaging the iris of a user comprising an optical device and an off-axis imaging device (302) attached to the optical device, wherein the optical device comprises a head-mounted device, and wherein
the off-axis imaging device (302) comprises a lens (300, 400) corresponding to a lens plane (401) and an imaging device body (303, 402) coupled to the lens (300, 400) and corresponding to an imager plane (404),
the off-axis imaging device is configured to capture an image of an iris of an eye (303, 407) of the user, the iris corresponding to an iris plane (301), and
the lens (300, 400) of the off-axis imaging device is configured to shift 1.0 mm to 2.5 mm in a direction parallel to the imager plane (404), wherein the lens plane (401) is parallel to the imager plane (404).

2. The system of claim 1, wherein the head-mounted device comprises a pair of eyeglasses or goggles.

3. The system of claim 2, wherein the head-mounted device comprises a pair of eyeglasses, the pair of eyeglasses comprising a frame having an upper rim and a lower rim, and a transparent display (304).

4. The system of claim 3, wherein the off-axis imaging device (302) is attached to the lower rim of the frame.

5. The system of claim 1, wherein the lens (300, 400) of the off-axis imaging device (302) has a tilt (305) ranging from about 2.0 to about 8.5 degrees.

6. A method for imaging an iris comprising:
providing a system according to any of claims 1 to 5; and
imaging an iris of an individual using the off-axis imaging device (302), wherein the off-axis imaging device (302) comprises a lens (300, 400) and a camera body (303, 402).

7. The method of claim 6, further comprising obtaining biometric information from the imaged iris and processing the biometric information to verify the identity of the individual.

8. The method of claim 7, wherein the biometric information is converted into an iris code.

9. The method of claim 6, further comprising tilting the lens (300, 400) of the off-axis imaging device (302) to adjust a focal plane (408) of the camera body (303, 402) to be parallel with a plane of the individual's iris.

10. The method of claim 9, wherein the lens (300, 400) is tilted between about 2.0 to about 8.5 degrees.

11. The method of claim 6, wherein imaging the iris comprises partially or entirely imaging the iris of the individual.

12. The method of claim 6, wherein one or both irises of the individual are partially or entirely imaged.

## Patentansprüche

1. Ein System zum Abbilden der Iris eines Benutzers, das ein optisches Gerät und eine an dem optischen Gerät angebrachte Off-Axis-Abbildungsvorrichtung (302) umfasst, wobei das optische Gerät eine am Kopf befestigte Vorrichtung umfasst, und wobei die Off-Axis-Abbildungsvorrichtung (302) eine Linse (300, 400), die einer Linsenebene (401) entspricht, und einen Abbildungsvorrichtungskörper (303, 402) umfasst, der mit der Linse (300, 400) verbunden ist und einer Bildebene (404) entspricht, wobei die Off-Axis-Abbildungsvorrichtung so gestaltet ist, dass sie ein Bild einer Iris eines Auges (303, 407) des Benutzers erfasst, wobei die Iris einer Irisebene (301) entspricht, und die Linse (300, 400) der Off-Axis-Abbildungsvorrichtung so gestaltet ist, dass sie sich um 1.0 mm bis 2.5 mm in einer Richtung parallel zu der Bildebene (404) zu verschieben,
wobei die Linsenebene (401) parallel zu der Bildebene (404) liegt.

2. Das System nach Anspruch 1,
wobei das am Kopf montierte Gerät eine Brille oder Schutzbrille umfasst.

3. Das System nach Anspruch 2,
wobei das am Kopf befestigte Gerät eine Brille umfasst, wobei die Brille einen Rahmen mit einem oberen Rand und einem unteren Rand und ein transparentes Display (304) umfasst.

4. Das System nach Anspruch 3,
wobei die Off-Axis-Abbildungsvorrichtung (302) am unteren Rand des Rahmens befestigt ist.

5. Das System nach Anspruch 1,
wobei die Linse (300, 400) der Off-Axis-Abbildungsvorrichtung (302) eine Neigung (305) im Bereich von etwa 2,0 bis etwa 8,5 Grad° aufweist.

6. Ein Verfahren zum Abbilden einer Iris, das folgendes umfasst:
Bereitstellen eines Systems nach einem der Ansprüche 1 bis 5: und Abbilden der Iris einer Person unter Einsatz der Off-Axis-Abbildungsvorrichtung (302),
wobei die Off-Axis-Abbildungsvorrichtung (302) eine Linse (300, 400) und einen Kamerakörper (303, 402) umfasst.

7. Das Verfahren nach Anspruch 6 umfaßt ferner die Erfassung biometrischer Informationen von der abgebildeten Iris und die Bearbeitung der biometrischen Informationen zur Überprüfung der Identität der Person.

8. Das Verfahren nach Anspruch 7,
wobei die biometrische Information in einen Iris-Code umgewandelt wird.

9. Das Verfahren nach Anspruch 6 umfasst ferner das Kippen der Linse (300, 400) der Off-Axis-Abbildungsvorrichtung (302), um eine Brennebene (408) des Kameragehäuses (303, 402) so einzustellen, dass sie parallel zu einer Ebene der Iris der Person verläuft.

10. Das Verfahren nach Anspruch 9,
wobei die Linse (300, 400) zwischen etwa 2,0 und etwa 8,5 Grad geneigt ist.

11. Das Verfahren nach Anspruch 6,
wobei die Abbildung der Iris die teilweise oder vollständige Abbildung der Iris der Person umfasst.

12. Das Verfahren nach Anspruch 6,
wobei eine oder beide Iris der Person teilweise oder vollständig abgebildet werden.

## Revendications

1. Un système d'imagerie de l'iris d'un utilisateur comprenant un dispositif optique et un dispositif d'imagerie hors axe (302) fixé au dispositif optique, dans lequel le dispositif optique comprend un dispositif monté sur la tête, et dans lequel le dispositif d'imagerie hors axe (302) comprend une lentille (300, 400) correspondant à un plan de la lentille (401) et un corps de dispositif d'imagerie (303, 402) couplé à la lentille (300, 400) et correspondant à un plan de l'imageur (404),
le dispositif d'imagerie hors axe est configuré pour capturer une image d'un iris d'un œil (303, 407) de l'utilisateur, l'iris correspondant à un plan de l'iris (301), et la lentille (300, 400) du dispositif d'imagerie hors axe est configurée pour se décaler de 1,0 mm à 2,5 mm dans une direction parallèle au plan de l'imageur (404),
dans lequel le plan de la lentille (401) est parallèle au plan de l'imageur (404).

2. Le système selon la revendication 1, dans lequel le dispositif monté sur la tête comprend une paire de lunettes ou de lunettes de protection.

3. Le système selon la revendication 2, dans lequel le dispositif monté sur la tête comprend une paire de lunettes, ladite paire de lunettes comprenant une monture ayant un bord supérieur et un bord inférieur, et un affichage transparent (304).

4. Le système selon la revendication 3, dans lequel le dispositif d'imagerie hors axe (302) est fixé au bord inférieur de la monture.

5. Le système selon la revendication 1, dans lequel la lentille (300, 400) du dispositif d'imagerie hors axe (302) a une inclinaison (305) comprise entre environ 2,0 et 8,5 degrés.

6. Un procédé d'imagerie d'un iris comportant les étapes consistant à :
fournir un système selon l'une quelconque des revendications 1 à 5 ; et
imager un iris d'un individu en utilisant le dispositif d'imagerie hors axe (302), dans lequel le dispositif d'imagerie hors axe (302) comprend une lentille (300, 400) et un corps de caméra (303, 402).

7. Le procédé selon la revendication 6, consistant en outre à obtenir des informations biométriques à partir de l'iris imagé et à traiter ces informations biométriques pour vérifier l'identité de l'individu.

8. Le procédé selon la revendication 7, dans lequel les informations biométriques sont converties en un code d'iris.

9. Le procédé selon la revendication 6, consistant en outre à incliner la lentille (300, 400) du dispositif d'imagerie hors axe (302) pour ajuster un plan focal (408) du corps de caméra (303, 402) de manière à l'amener à être parallèle à un plan de l'iris de l'individu.

10. Le procédé selon la revendication 9, dans lequel la lentille (300, 400) est inclinée d'environ 2,0 à environ 8,5 degrés.

11. Le procédé selon la revendication 6, dans lequel imager un iris comprend imager entièrement ou partiellement l'iris d'un individu.

12. Le procédé selon la revendication 6, dans lequel l'un ou les deux iris de l'individu sont partiellement ou totalement imagé(s).
